# DEMANDE DE BREVET EUROPEEN

(11) **EP 4 772 286 A1**
(43) Date de publication de la demande: **08.07.2026**
(21) Numéro de dépôt: 25227165.5
(22) Date de dépôt: 24.12.2025
(51) Int. Cl.: B05D 1/32, B05D 3/06, B08B 7/00, B23K 26/36, B44D 2/00, B05D 7/02, B60Q 1/00, B60Q 1/26, F21S 43/20

(54) **PROCÉDÉ DE FABRICATION D'UNE PIÈCE DE VÉHICULE COMPRENANT UNE PORTION TRANSPARENTE OU TRANSLUCIDE**

(30) Priorité: 26.12.2024 FR 2415301
(71) Demandeur: OPmobility SE, 69007 Lyon (FR)
(72) Inventeur: ANDRE, Gérald, 01150 SAINTE-JULIE (FR)
(74) Mandataire: LLR

(57) **Abrégé**

Le procédé (100) de fabrication d'une pièce de véhicule comprend les étapes suivantes :
- masquage (102) d'une portion d'un corps de pièce, de véhicule, transparent ou translucide, de manière à former une portion masquée du corps de pièce ;
- application (103) d'une couche de peinture sur le corps de pièce, dans une zone englobant tout ou partie de la portion masquée, de manière à former une zone peinte ;
- retrait (104) du masquage, la portion masquée devenant une portion démasquée et dépourvue de peinture ;
- irradiation (105), avec un rayonnement laser, de la couche de peinture, dans une bordure de la portion démasquée, de manière à définir une limite nette de peinture autour de la portion démasquée.

## Description

### Domaine technique

La présente invention concerne un procédé de fabrication d'une pièce de véhicule, en particulier destinée à être utilisée dans des applications nécessitant des zones transparentes ou translucides. L'invention concerne également une pièce de véhicule, un composant lumineux pour véhicule automobile et un véhicule automobile.

### État de la technique

Un véhicule comprend plusieurs pièces transparentes destinées à transmettre de la lumière. Il s'agit notamment des pièces utilisées à des fins de signalisation lumineuse ou d'éclairage réglementaire, par exemple celles protégeant les blocs optiques des feux de route et de croisement ou bien des feux clignotants. Par ailleurs, le véhicule peut également présenter des sources de lumières prévues à des fins décoratives qui améliorent l'esthétique du véhicule.

Un des souhaits des équipes de stylistes des constructeurs automobiles est notamment de pouvoir intégrer des zones d'éclairage ou de signalisation lumineuse à une pièce de carrosserie peinte sans jeu d'interface et sans effet de pièce rapportée. Cependant, il est nécessaire que ces zones respectent des normes règlementaires de photométrie, en particulier d'intensité lumineuse transmise. Pour ce faire, il convient notamment, pour certaines fonctions d'éclairage ou de signalisation, d'éviter qu'un matériau transparent ou translucide utilisé dans la pièce concernée ne transmette une lumière trop diffuse au regard des intensités règlementaires à atteindre, sauf à exiger une puissance lumineuse trop importante pour compenser la diffusion.

Le problème est donc de pouvoir peindre une pièce de véhicule tout en conservant sur la même pièce une zone de transparence ou translucidité, permettant de transmettre la lumière émise par une source lumineuse, respectant les normes règlementaires de photométrie.

On connaît, dans l'état de la technique, notamment du procédé décrit dans le document FR3095620, un procédé de masquage, consistant à appliquer un adhésif temporaire sur une portion de la pièce, visant à masquer cette portion. L'étape suivante consiste à appliquer une couche de peinture sur la pièce, puis à retirer le masquage. La portion démasquée forme la portion transparente ou translucide de la pièce permettant la transmission de lumière.

Ce procédé n'altère pas les propriétés optiques de la portion démasquée, et, en particulier, n'augmente pas le caractère diffus de la lumière transmise, de sorte qu'il est possible de transmettre une lumière respectant les normes règlementaires dès lors que le matériau choisi est adéquat.

Cependant, après retrait du masquage, la bordure de la zone démasquée, formant la limite entre la zone peinte et la zone démasquée, est souvent peu nette, peu esthétique et peut présenter des pertes d'adhérence, ce qui n'est pas acceptable. C'est pour cette raison que le procédé de masquage est plutôt utilisé dans le cas où la zone non peinte, faisant l'objet du masquage, présente une ligne de style, par exemple un fond de gouge ou une ligne de carre, permettant aussi une délimitation de forme visuelle avec la partie peinte de la pièce. Cette ligne de style aide en effet à la mise en œuvre du procédé, en particulier pour poser l'adhésif en début de procédé, puis pour cacher les défauts du résultat dans ou derrière les reliefs de la ligne de style.

On connaît un procédé alternatif d'irradiation laser, notamment du même document FR3095620. Après application de la couche de peinture, on irradie par laser la portion de la pièce que l'on souhaite transparente ou translucide, de manière à retirer la peinture de cette portion. Ce procédé permet de définir une limite nette, esthétique et adhérente, entre une zone peinte de la pièce et une zone dépourvue de peinture.

Cependant, l'irradiation laser peut modifier la surface de la pièce, rendant la lumière passant à travers la pièce particulièrement diffuse. Ce procédé rend donc dans ce cas difficile le respect de normes règlementaires de photométrie, à source lumineuse équivalente. Le procédé d'irradiation est également plus long que le procédé de masquage, en particulier lorsqu'une norme règlementaire à respecter requiert une grande surface éclairante.

Il est à noter que ces deux procédés sont connus de la personne du métier en tant que solutions purement alternatives l'une à l'autre, comme c'est le cas dans le document FR3095620. En effet, elles mettent en œuvre deux technologies totalement différentes dans un même objectif, génèrent des défauts qui risquent à première vue d'être cumulés, ce qui n'incite pas la personne du métier à imaginer un usage complémentaire.

L'invention a notamment pour but de faire apparaître une zone d'éclairage sur une pièce de véhicule, sans jeu, sans effet de pièce rapportée, et en évitant autant que possible les inconvénients des deux procédés évoqués ci-avant.

### Résumé de l'invention

La présente invention vise à surmonter ces limitations en proposant un procédé de fabrication d'une pièce de véhicule, comprenant les étapes suivantes :
- masquage d'une portion d'un corps de pièce de véhicule transparente ou translucide, de manière à former une portion masquée du corps de la pièce ;
- application d'une couche de peinture sur le corps de la pièce, dans une zone englobant tout ou partie de la portion masquée, de manière à former une zone peinte ;
- retrait du masquage, la portion masquée devenant une portion démasquée et dépourvue de peinture;
- irradiation, avec un rayonnement laser, de la couche de peinture, dans une bordure de la portion démasquée, de manière à définir une limite nette de peinture autour de la portion démasquée.

Ainsi, l'invention tire parti des avantages des deux procédés de l'état de la technique et minimise leurs inconvénients respectifs. En particulier, l'irradiation laser est appliquée seulement au niveau de la bordure de la portion démasquée et non sur toute la portion de la pièce destinée à être transparente ou translucide. Le procédé est donc à la fois rapide, en ciblant par l'irradiation laser, plus long que le procédé de masquage, uniquement la bordure, et aboutit à un résultat satisfaisant tant sur le plan de la transmission de la lumière par la zone ayant fait l'objet du masquage qu'au niveau de la qualité esthétique de la bordure de cette zone, grâce au procédé d'irradiation laser.

Ci-après suivent d'autres caractéristiques optionnelles prises seules ou en combinaison.

De préférence, le procédé comprend une étape de fabrication du corps de la pièce transparente ou translucide par moulage d'un plastique, par exemple du polycarbonate, du polyamide, du polytéréphtalate d'éthylène, du polytéréphtalate de butylène, du polyuréthane, du polychlorure de vinyle, de l'acrylonitrile butadiène styrène, du styrène acrylonitrile, de l'acrylonitrile styrène acrylate, du polyméthacrylate de méthyle, du copolymère de cyclo-oléfine ou du cyclo-oléfines-polymère.

Avantageusement, le plastique est un polypropylène transparent ou translucide.

En effet, ce matériau est particulièrement approprié pour la fabrication de pièces de carrosseries exposées à des contraintes de déformation et des petits chocs, en particulier de grandes pièces. Or, il est également possible de le rendre translucide ou transparent, et donc de former des composants lumineux pour véhicules. Cependant, sa surface est altérée lors d'une irradiation laser, modifiant la transparence et la diffusion de la lumière traversant le matériau. Ainsi, le procédé selon l'invention permet de bénéficier des avantages liés à l'utilisation de polypropylène transparent ou translucide pour la réalisation d'au moins une portion de pièce de véhicule transparente ou translucide tout en évitant, en confinant l'irradiation laser à une bordure, une plus grande partie de ses inconvénients liées à la mise en œuvre d'une étape d'irradiation avec un rayonnement laser.

De préférence, l'étape d'irradiation comprend en outre l'irradiation, à partir de la limite nette de peinture, d'une portion de la zone peinte, de manière à former une zone intermédiaire située entre la portion démasquée et le reste de la zone peinte.

Ainsi, le procédé permet la formation, entre une zone transparente ou translucide, sans altération de la surface, et une zone peinte, d'une zone intermédiaire, avec ou sans altération de la surface en fonction du matériau formant la pièce. Cette zone intermédiaire laisse passer la lumière mais peut présenter des caractéristiques de photométrie différentes de celles de la zone transparente ou translucide, de manière à générer des effets esthétiques et/ou un effet de transition entre la zone transparente ou translucide et la zone peinte.

Avantageusement l'étape d'irradiation est mise en œuvre de manière à former un ou des motifs spécifiques dans la zone intermédiaire, par exemple des hachures

Ainsi, la zone intermédiaire présente un ou des motifs qui la rendent esthétique. L'étape d'irradiation offre des possibilités de choix esthétiques divers.

Avantageusement :
- l'étape de masquage comprend la mise en place d'un moyen de recouvrement temporaire,
- l'étape d'application de la couche de peinture comprend l'application d'un primaire d'adhérence opaque, de préférence sombre, et l'application d'une couche de base dans une teinte prédéterminée.

De préférence, le procédé comprend en outre l'application d'une couche de vernis sur la pièce.

Avantageusement, l'application d'une couche de vernis intervient après l'étape d'irradiation laser.

L'invention a également pour objet une pièce de véhicule obtenue par le procédé de fabrication tel qu'énoncé précédemment, comprenant :
- une portion transparente ou translucide formée par la portion démasquée ;
- une portion peinte formée par la zone peinte.

Avantageusement, la pièce comprend également une portion intermédiaire formée par la zone intermédiaire, entre la portion transparente ou translucide et la portion peinte.

De préférence, la portion transparente ou translucide présente une valeur de coefficient de brume inférieure d'au moins 10% à la valeur du coefficient de brume de la zone intermédiaire, de préférence d'au moins 20%, et de manière préférée d'au moins 30%.

Ce coefficient de brume correspond au « coefficient of Haze » connu de l'homme du métier. On peut également le définir comme correspondant au rapport entre la transmission de lumière sous forme diffuse et la transmission de lumière totale.

Ainsi, la portion intermédiaire est une zone de transition pouvant être éclairée mais à vocation principalement esthétique.

L'invention a également pour objet un composant lumineux pour véhicule automobile, comprenant une pièce telle qu'énoncée précédemment et une source de lumière destinée à éclairer au moins une partie de la portion transparente ou translucide de la pièce.

De préférence, ce composant lumineux forme l'un des éléments suivants :
- un feu de jour ;
- un feu de position ;
- un clignotant ;
- un feu de recul ;
- un phare

L'invention a également pour objet un véhicule automobile comprenant au moins une pièce telle que décrite précédemment et/ou au moins un composant lumineux tel que décrit précédemment.

On décrit également un composant extérieur de véhicule présentant une surface principale, comprenant la pièce telle qu'énoncée précédemment, correspondant au moins au double de la surface de la pièce, le composant extérieur formant par exemple un pare-chocs, une calandre, une aile, un déflecteur arrière de toi, un capot ou un panneau de hayon.

Avantageusement, la pièce de véhicule comprend plusieurs matériaux.

### Brève description des figures

L'invention sera mieux comprise à la lecture de la description qui va suivre donnée uniquement à titre d'exemple et faite en se référant aux dessins annexés dans lesquels :
- La [Fig. 1] est un logigramme d'un procédé de fabrication d'une pièce de véhicule selon un premier mode de mise en œuvre de l'invention ;
- La [Fig. 2] est une vue en coupe d'une pièce de véhicule dans le cadre d'un procédé de fabrication de la [Fig.1], selon le premier mode de mise en œuvre ;
- La [Fig. 3] est une vue en coupe d'une pièce de véhicule dans le cadre du procédé de fabrication ;
- La [Fig. 4] est une vue en coupe d'une pièce de véhicule dans le cadre du procédé de fabrication ;
- La [Fig. 5] est une vue en coupe d'une pièce de véhicule dans le cadre du procédé de fabrication ;
- La [Fig. 6] est une vue en coupe d'une pièce de véhicule dans le cadre du procédé de fabrication ;
- La [Fig. 7] est une vue en coupe d'une pièce de véhicule dans le cadre du procédé de fabrication ;
- La [Fig. 8] est une vue de face de la pièce obtenue ;
- La [Fig. 9] est une vue d'un véhicule comprenant la pièce obtenue ;
- La [Fig. 10] est un logigramme d'un procédé de fabrication d'une pièce de véhicule selon un deuxième mode de mise en œuvre de l'invention ;
- La [Fig. 11] est une vue en coupe d'une pièce de véhicule dans le cadre d'un procédé de fabrication de la [Fig. 10], selon le deuxième mode de mise en œuvre ;
- La [Fig. 12] est une vue de face de la pièce obtenue par le deuxième mode de mise en œuvre ;
- La [Fig. 13] est une vue d'un véhicule comprenant la pièce obtenue par le deuxième mode de mise en œuvre;
- La [Fig. 14] est une vue en coupe d'une pièce de véhicule obtenue par une variante du procédé de la [Fig. 10].

### Description détaillée

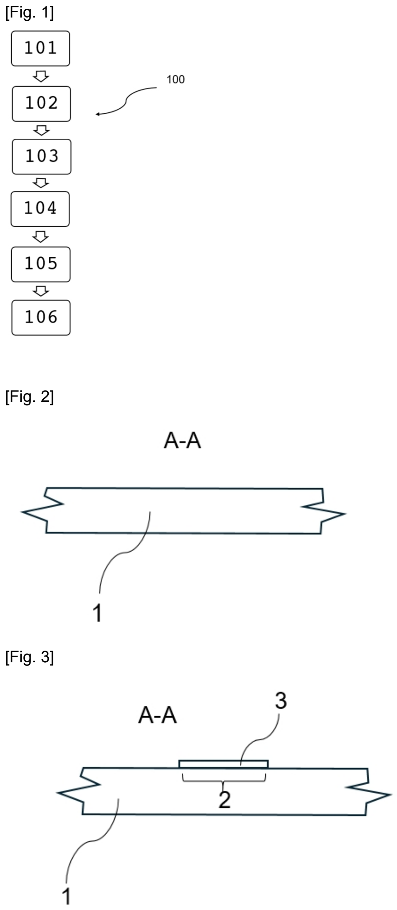

En référence aux figures 1 à 8, on décrit ci-après un procédé 100 de fabrication d'une pièce de véhicule 11. En particulier, selon le présent mode de réalisation, on prévoit que la pièce de véhicule 11 est une pièce de carrosserie de véhicule. Selon d'autres modes de réalisation, on peut prévoir que la pièce de véhicule est une pièce autre qu'une pièce de carrosserie. Ce procédé est mis en œuvre par des moyens connus de la personne du métier et qui ne sont pas l'objet de l'invention.

À l'étape 101, on obtient un corps de pièce 1 de carrosserie de véhicule, par moulage, de préférence par injection, de polycarbonate transparent ou translucide.

On définit par « transparent » un matériau présentant un taux de transparence supérieur ou égal à 80 % et un coefficient de brume inférieur ou égal à 30 %. On définit par « translucide » un matériau présentant un taux de transparence situé entre 20 et 80 %, et un coefficient de brume situé entre 30 et 90 %. Un matériau « transparent ou translucide » présente donc, au sens de l'invention, un taux de transparence au moins égal à 20 % et un coefficient de brume inférieur ou égal à 90 %. Par « coefficient de brume », on désigne le « coefficient of Haze », connu de l'homme du métier. On peut également le définir comme correspondant au rapport entre la transmission de lumière sous forme diffuse et la transmission de lumière totale.

À l'étape 102, on réalise un masquage d'une portion 2 du corps de pièce 1, de manière à recouvrir cette portion 2 masquée de la pièce. Ce masquage comprend la mise en place d'un moyen de recouvrement 3 temporaire sur la portion 2, comme illustré à la figure 3.

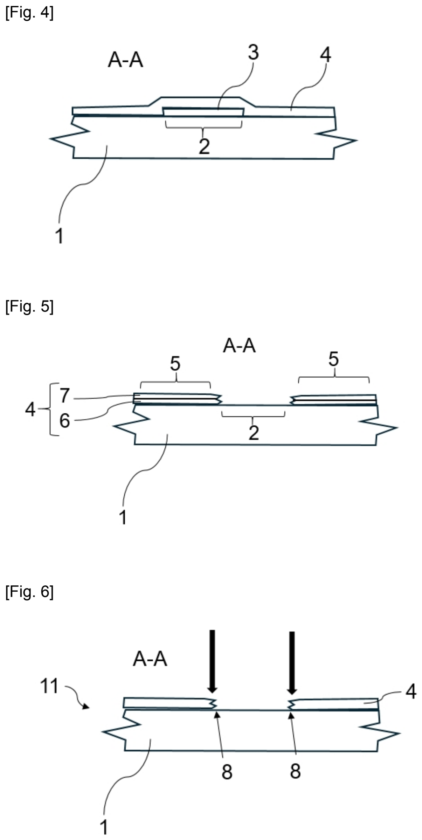

À l'étape 103, on réalise une application d'une couche 4 de peinture sur le corps de pièce 1, dans une zone englobant tout la portion masquée 2, de manière à former une zone peinte comme illustré à la figure 4. Selon le présent mode de réalisation, l'application de la couche de peinture 4 comprend l'application d'un primaire d'adhérence sombre et opaque 6, et l'application d'une couche de base 7 dans une teinte prédéterminée. Ces éléments sont illustrés en figure 5.

Dans une variante non illustrée, d'autres choix de primaire 6 et de couche de base 7 sont effectuées.

Dans une variante non illustrée, seule une couche est appliquée : la peinture est monocouche. Il s'agit par exemple d'une seule couche opaque à la lumière. Il peut notamment s'agir d'une laque. Il peut s'agir également d'une monocouche ayant pour équivalent esthétique une combinaison d'une base et d'un vernis. On peut d'ailleurs envisager de combiner une telle monocouche avec un primaire.

À l'inverse, dans une autre variante non illustrée, plusieurs couches se succèdent.

Dans une variante non illustrée, la zone peinte n'englobe qu'une partie de la portion masquée 2. Cela permet d'économiser de la peinture, par exemple au centre de la portion masquée.

À l'étape 104, on réalise le retrait du masquage, la portion masquée 2 devenant une portion démasquée 2 et dépourvue de peinture, comme illustré à la figure 5.

À l'étape 105, on réalise une irradiation, avec un rayonnement laser, de la couche 4 de peinture, dans une bordure 8 de la portion démasquée 2, de manière à définir une limite nette de peinture autour de la portion démasquée 2, comme illustré à la figure 6.

Par souci de simplification, à l'exception de la figure 5, la couche de peinture 4 est représentée en une seule couche sans distinction entre la couche de primaire d'adhérence 6 et la couche de base 7. Bien entendu, comme indiqué précédemment, selon les modes de réalisation, la composition de la couche de peinture 4 peut varier et en particulier être monocouche.

À l'étape 106, on réalise une étape d'application d'une couche de vernis (non représentée) sur la pièce.

On obtient par ce procédé 100 une pièce de véhicule 1 comprenant :
- une portion transparente ou translucide formée par la portion démasquée 2 ;
- une portion peinte formée par la zone peinte 5.

Ces portions transparente ou translucide et peinte sont séparées par une limite nette de peinture.

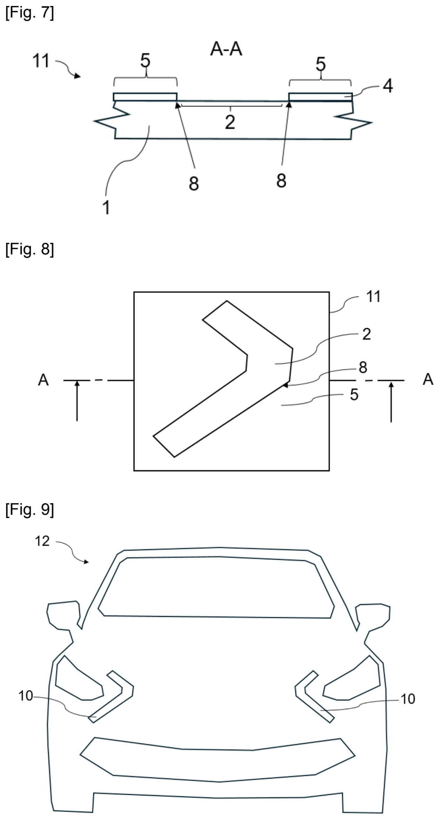

La pièce 11 obtenue est également illustrée, vue de face, à la figure 8.

Dans une variante non illustrée, l'étape d'irradiation s'étend dans la zone peinte 5. Etant donné que l'irradiation laser n'altère pas sensiblement la surface du polycarbonate, la transparence et la diffusion de la lumière passant à travers une zone irradiée n'est pas différente de celle passant à travers de la portion 2 transparente ou translucide. Ainsi, étendre l'irradiation dans la zone peinte revient, pour ce mode de réalisation, à remplacer une partie de la portion peinte 5 par une extension de la portion 2 transparente ou translucide.

La figure 9 illustre un véhicule 12 comprenant deux composants lumineux 10 pour véhicule automobile. Ces composants lumineux 10 comprennent la pièce de véhicule 11. Une source lumineuse, non illustrée, est située, à l'intérieur du véhicule, en face de chaque pièce 11, de manière à émettre la lumière qui passera à travers la portion transparente ou translucide 2.

Ces composants lumineux 10 forment, selon les fonctionnalités prévues, au choix l'un des éléments suivants :
- un feu de jour ;
- un feu de position ;
- un clignotant ;
- un feu de recul ; ou
- un phare.

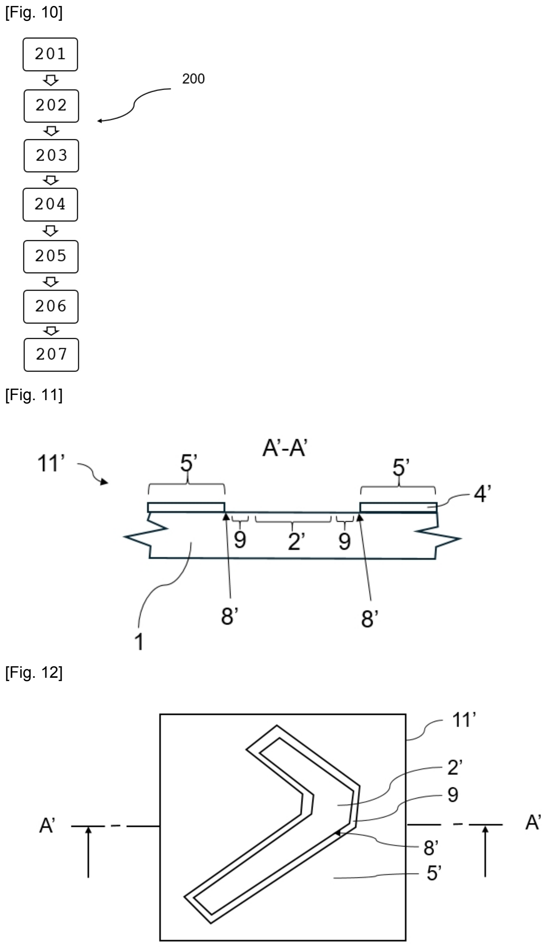

On décrit ci-après un deuxième mode de mise en œuvre du procédé de fabrication, référencé 200 et illustré à la figure 10.

À l'étape 201, on obtient un corps de pièce 1 de carrosserie de véhicule, cette fois par moulage, de préférence par injection, de polypropylène transparent ou translucide.

Les étapes 202 à 206 sont similaires aux étapes 102 à 106.

La pièce obtenue est illustrée aux figures 11 et 12. Les références numériques correspondant à des éléments similaires à ceux du mode précédent sont pourvues d'une apostrophe pour différencier cette pièce de celle obtenue par le procédé 100.

L'étape 207 d'irradiation, ajoutée par rapport au procédé 100, comprend en outre l'irradiation, à partir de la limite nette de peinture de la bordure 8', d'une portion de la zone peinte 5', de manière à former une zone intermédiaire 9 située entre la portion démasquée 2' et le reste de la zone peinte 5'.

On obtient donc par ce procédé 200 une pièce de véhicule 11' comprenant :
- une portion transparente ou translucide formée par la portion démasquée 2' ;
- une portion peinte formée par la zone peinte 5' ;
- une portion intermédiaire formée par la zone intermédiaire 9, entre la portion transparente ou translucide 2' et la portion peinte 5'.

La lumière passant à travers la portion intermédiaire 9, irradiée, est plus diffuse et d'intensité lumineuse moindre, par rapport à celle traversant la portion 2 transparente de la pièce 11 obtenue par le procédé 100, du fait de l'irradiation laser de la zone intermédiaire 9. En particulier, l'irradiation de la zone peinte du polypropylène génère la présence d'une couche de reliquat, non épaisse, et/ou une altération des propriétés optiques de la surface du polypropylène.

Cette différence de transparence et de diffusion génère un effet esthétique et de transition entre la portion 2' et la portion 5'. Il est avantageux, d'un point de vue esthétique, que la portion transparente ou translucide 2' présente une valeur de coefficient de brume inférieure d'au moins 10% à la valeur du coefficient de brume de la portion intermédiaire, de préférence d'au moins 20%, et de manière préférée d'au moins 30%.

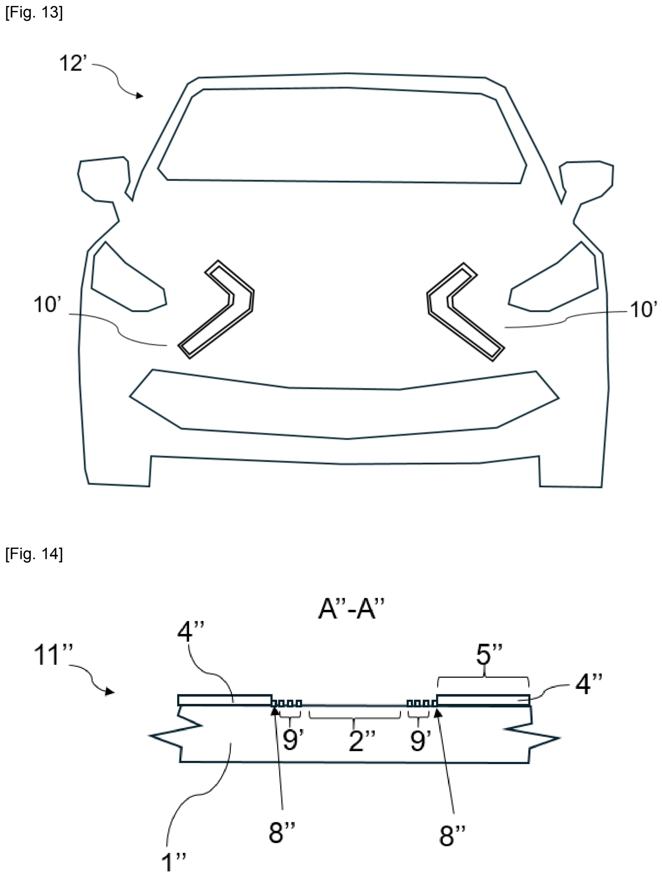

La figure 13 illustre un véhicule 12' comprenant deux composants lumineux 10' pour véhicule automobile. Ces composants lumineux 10' comprennent la pièce de véhicule 11'. Une ou plusieurs sources lumineuses, non illustrée, est située, à l'intérieur du véhicule, en face de chaque pièce 11, de manière à émettre la lumière qui passera à travers la portion transparente ou translucide 2. Les composants lumineux 10' forment les mêmes éléments que les composants lumineux 10.

Dans une variante du procédé 200, l'étape d'irradiation 207 est mise en œuvre de manière à former un ou des motifs spécifiques dans la zone intermédiaire 9', par exemple des hachures, en irradiant par alternance dans cette zone intermédiaire 9'. Le résultat est celui schématisé à la figure 14, qui comprend des apostrophes supplémentaires pour chaque référence numérique correspondant à un élément similaire du mode de réalisation précédent. L'effet esthétique généré est donc encore différent.

Dans une sous-variante non illustrée, l'étape d'irradiation 207 est mise en œuvre de manière à générer des motifs évoluant de manière progressive, dans la zone intermédiaire 9', entre la zone 2" et la zone peinte 5". Par exemple, les hachures irradiées sont de plus en plus espacées ou de moins en moins larges, en partant de la portion démasquée 2", à mesure que l'on se rapproche de la zone peinte 5". L'effet esthétique généré est donc encore différent.

Dans une variante non illustrée, le polypropylène obtenu à l'étape 201 est différent, de celui obtenu dans le mode présenté ci-avant en ce que sa transparence et le caractère diffus de la lumière le traversant sera différent. L'homme du métier sait en effet faire varier les caractéristiques de fabrication du matériau de manière à faire varier des paramètres d'interaction du matériau avec la lumière. Dès lors, ces paramètres seront également différents en ce qui concerne la portion intermédiaire 9 ou 9'.

En variante des procédés décrits, le corps de pièce 1 est obtenu par moulage de l'un des matériaux suivants : du polyamide, du polytéréphtalate d'éthylène, du polytéréphtalate de butylène, du polyuréthane, du polychlorure de vinyle, de l'acrylonitrile butadiène styrène, du styrène acrylonitrile, de l'acrylonitrile styrène acrylate, du polyméthacrylate de méthyle, du copolymère de cyclo-oléfine ou du cyclo-oléfines-polymère.

En variante, la pièce 11 ou 11' peut être intégrée dans tout composant extérieur de véhicule présentant une surface principale, comprenant la pièce 11 ou 11', en particulier d'une taille correspondant au moins au double de la taille de la surface de la pièce 11 ou 11', le composant extérieur formant par exemple un pare-chocs, une calandre, une aile, un déflecteur arrière de toi, un capot ou un panneau de hayon ou un panneau de hayon. Dans ces variantes, une portion de la surface principale du composant comprend un matériau différent du matériau de la pièce.

L'invention n'est pas limitée aux modes de réalisation présentés et d'autres modes de réalisation apparaîtront clairement à l'homme du métier.

### Liste de références

1, 1', 1" : corps de pièce de véhicule
2, 2', 2" : zone masquée - zone démasquée - portion transparente ou translucide
3 : moyen de recouvrement temporaire
4, 4', 4": couche de peinture
5, 5', 5" : zone peinte - portion peinte
6 : primaire d'adhérence
7 : couche de base
8, 8', 8" : bordure
9', 9" : zone intermédiaire - portion intermédiaire
10, 10' : composant lumineux
11, 11' : pièce de véhicule
12, 12' : véhicule

## Revendications

1. Procédé (100 ; 200) de fabrication d'une pièce (11 ; 11' ; 11") de véhicule, **caractérisé en ce qu'**il comprend les étapes suivantes :
- masquage (102 ; 202) d'une portion (2 ; 2' ; 2") d'un corps de pièce (1 ; 1' ; 1"), de véhicule, transparent ou translucide, de manière à former une portion masquée du corps de pièce (1 ; 1' ; 1") ;
- application (103 ; 203) d'une couche de peinture (4 ; 4' ; 4") sur le corps de pièce (1 ; 1' ; 1"), dans une zone englobant tout ou partie de la portion masquée, de manière à former une zone peinte (5 ; 5' ; 5") ;
- retrait (104 ; 204) du masquage, la portion masquée devenant une portion (2 ; 2' ; 2") démasquée et dépourvue de peinture;
- irradiation (105 ; 205), avec un rayonnement laser, de la couche (4 ; 4' ; 4") de peinture, dans une bordure (8 ; 8') de la portion démasquée (2 ; 2' ; 2") de manière à définir une limite nette de peinture autour de la portion démasquée.

2. Procédé (100 ; 200) selon la revendication 1, comprenant une étape (101 ; 201) de fabrication du corps de pièce (1 ; 1' ;1") transparent ou translucide par moulage d'un plastique, par exemple du polycarbonate, du polyamide, du polytéréphtalate d'éthylène, du polytéréphtalate de butylène, du polyuréthane, du polychlorure de vinyle, de l'acrylonitrile butadiène styrène, du styrène acrylonitrile, de l'acrylonitrile styrène acrylate, du polyméthacrylate de méthyle, du copolymère de cyclo-oléfine ou du cyclo-oléfines-polymère.

3. Procédé (200) selon la revendication précédente, dans lequel le plastique est un polypropylène transparent ou translucide.

4. Procédé (200) selon l'une quelconque des revendications précédentes, dans lequel l'étape d'irradiation (205) comprend en outre l'irradiation, à partir de la limite nette de peinture, d'une portion de la zone peinte (5' ; 5"), de manière à former une zone intermédiaire (9 ; 9') située entre la portion démasquée (2' ; 2") et le reste de la zone peinte (5' ; 5").

5. Procédé (200) selon la revendication précédente, dans lequel l'étape d'irradiation (205) est mise en œuvre de manière à former un ou des motifs spécifiques dans la zone intermédiaire (9'), par exemple des hachures.

6. Procédé (100 ; 200) selon l'une quelconque des revendications précédentes, dans lequel :
- l'étape de masquage (102 ; 202) comprend la mise en place d'un moyen de recouvrement temporaire (3),
- l'étape d'application (103 ; 203) de la couche de peinture (4 ; 4' ; 4") comprend l'application d'un primaire d'adhérence (6) opaque, de préférence sombre, et l'application d'une couche de base (7) dans une teinte prédéterminée.

7. Pièce (11 ; 11') de véhicule obtenue par le procédé (100 ; 200) de fabrication selon l'une quelconque des revendications précédentes, comprenant :
- une portion transparente ou translucide formée par la portion démasquée (2 ; 2' ; 2");
- une portion peinte formée par la zone peinte (5 ; 5 ; 5").

8. Pièce (11') selon la revendication précédente en combinaison avec la revendication 4, comprenant également une portion intermédiaire formée par la zone intermédiaire (9 ; 9'), entre la portion transparente ou translucide (2 ; 2' ; 2") et la portion peinte (5 ; 5' ;5").

9. Pièce (11) de véhicule selon l'une des revendications 7 ou 8, dans laquelle la portion transparente ou translucide présente une valeur de coefficient de brume inférieure d'au moins 10% à la valeur du coefficient de brume de la zone intermédiaire, de préférence d'au moins 20%, et de manière préférée d'au moins 30%.

10. Composant lumineux (10 ; 10') pour véhicule automobile, comprenant une pièce (11 ; 11') selon l'une des revendications 7 à 9 et une source de lumière destinée à éclairer au moins une partie de la portion (2 ; 2' ; 2") transparente ou translucide de la pièce (11 ; 11').

11. Composant lumineux (10 ; 10') selon la revendication précédente, formant l'un des éléments suivants :
- un feu de jour ;
- un feu de position ;
- un clignotant ;
- un feu de recul ;
- un phare.

12. Véhicule automobile (12 ; 12') comprenant au moins une pièce (11 ; 11') selon l'une des revendications 7 à 9 et/ou au moins un composant lumineux (10 ; 10') selon la revendication 10 ou 11.
